# EUROPEAN PATENT SPECIFICATION

(11) **EP 4 151 396 B1**
(45) Date of publication and mention of the grant of the patent: **28.08.2024**
(21) Application number: 22196765.6
(22) Date of filing: 21.09.2022
(51) Int. Cl.: B29D 12/02, H05B 3/00, B29C 65/44, B29C 65/00

(54) **HEATING SYSTEM AND METHOD FOR AN EYEWEAR HINGING-MACHINE**
HEIZSYSTEM UND VERFAHREN FÜR BRILLENMONTIERMASCHINE
SYSTÈME DE CHAUFFAGE ET PROCÉDÉ POUR UNE MACHINE D'ASSEMBLAGE DE CHARNIÈRES DE LUNETTES

(30) Priority: 21.09.2021 IT 202100024230
(43) Date of publication of application: 22.03.2023
(73) Proprietor: Autonoma Innovazione S.r.l., 31058 Susegana (TV) (IT)
(72) Inventor: GRASSIA, Alessio, 31029 Vittorio Veneto (TV) (IT); GALVANO, Sofia, 31010 Mareno di Piave (TV) (IT); DE CONTI, Mirco, 31010 Godega di Sant'Urbano (TV) (IT); POL, Fabio, 31025 Santa Lucia di Piave (TV) (IT)
(74) Representative: Frare, Paolo

(56) References cited:
- GB-A- 2 119 697
- KR-A- 20170 114 153
- SU-A1- 1 348 211
- US-A- 1 760 155
- US-A- 3 916 147

## Description

The present invention relates to a heating system and method for an eyewear hinging-machine.

Nowadays, it is known to attach the arms of eyeglasses frames to the front of such frames by means of hinges that allow the arms to be folded approximately parallel to the front so as, for example, to facilitate the storage and transport of eyeglasses.

For this purpose, metal hinges are known which comprise two elements, hinged to each other, which in this text will be referred to as "hinge parts", one of which is attached to the frame front and the other to one of the arms, so as to allow the rotation of that arm with respect to the frame front.

If the frame front is made, in whole or in part, of a thermoplastic material, for example a polymer such as cellulose acetate, the hinge parts can be attached to the frame front, in particular to a portion of it made of thermoplastic material, by means of a process of melting and subsequently cooling the thermoplastic material, which will be explained in more detail below.

This known type of fixing process is carried out by means of special machines, called "hinging-machines", and involves first of all making, for example by means of milling, two seats for as many hinge parts on the thermoplastic portion of the frame front, in correspondence of where the hinge parts are to be fixed (typically at the sides of the two regions of the frame front intended for the application of the lenses).

Such hinging-machines of the known type comprise a heating vice, equipped with two jaws, made of copper, that can be selectively brought closer together so as to grab a hinge part between them.

After grabbing a hinge part so that it protrudes from the heating vice with one end thereof intended to be coupled with the frame front, the heating vice is moved, by means of a special drive, until this end of the hinge part is positioned in one of the two seats previously obtained in the frame front.

The jaws of the heating vice are electrically connected to a power supply circuit capable of supplying an alternating electrical voltage to their ends.

When the jaws clamp the hinge part, the latter, being made of an electrically conductive material (usually a metal alloy, such as nickel silver), electrically connects these two jaws; in this condition, the application of an electric voltage to the ends of the jaws generates the passage of an electric current through the jaws and the hinge part, which heats up due to the Joule effect, increasing its temperature.

The process of fixing the hinge part then involves applying electrical voltage to the ends of the jaws when the hinge part is in the vicinity of the seat formed in the frame front; this hinge part then heats up due to the Joule effect, consequently heating the walls of the seat until they soften and partially melt, then flowing into the seat, covering and encapsulating the end of the hinge part contained therein.

When the power supply is interrupted, the hinge part cools, and so does the thermoplastic melt present in the seat, which solidifies, encapsulating the end of the hinge part positioned in the seat, so that the hinge part is firmly fixed to the frame front of the frame.

This process is then repeated for the other hinge part.

However, such known solutions have some disadvantages.

The first disadvantage is the high energy consumption; in fact, in order to allow sufficient heating of the hinge part, the current flowing through the circuit comprising it and the two jaws, having very low electrical resistance (lower than that of the hinge part), must be approximately 700-1000 Amperes, with a voltage at the ends of this circuit of between approximately 1 Volt and 10 Volts, for an energy consumption comprised between about 0.7-10 kW.

In addition, the high current flowing through this circuit can cause rapid overheating of the hinge part, facilitated by the fact that the latter's electrical resistance increases as the temperature rises, with the consequent risk of excessive melting of the frame front, and possible permanent puncture, or in any case non-reversible damage (e.g. formation of surface blisters), thereof. The document GB-A-2119697 discloses a heating system for a hinging-machine in accordance with the preamble of claim 1.

The main task of the present invention is to solve the problems listed above, and thus to realise a heating system and method for a hinging-machine that has a lower energy consumption than known solutions, while at the same time reducing the risk of irreversible damage to the frame front of the frame due to excessive overheating of the hinge part.

Within the context of this task, another aim of the invention is to realise a heating system and heating method for the hinge part that is user-friendly and requires little human intervention.

The applicant has realised that, by using jaws with a very high electrical resistance, which is several orders of magnitude greater than that of the hinge part, and in particular between 10 and 40 MQ, and by supplying the circuit comprising the jaws and a hinge part of a hinge for eyeglasses with a direct electric current, the value of said current sufficient to obtain heating of the hinge part to melt a thermoplastic portion of the frame front of an eyeglasses frame can be much lower than in the known solutions described above (for example, between 1 and 150 Amperes, preferably between 1 and 65 Amperes, with a voltage at the ends of the circuit of the order of magnitude of that used in the known technique, and preferably less than 5 Volts); the use of such a low current allows for easy and precise automatic and continuous regulation of this current, using an electronic board which forcibly delivers this current and which measures the resulting voltage at the ends of the circuit (which, at constant current, as in this case, is a function of the resistance of the jaws and the hinge part, and therefore of their temperature), and adjusting the current delivered by the board according to the measured voltage value, thanks to electronic control means (e.g. a PLC or a microcontroller, possibly integrated into the board) controlling the electronic board.

In this way, in addition to guaranteeing very low energy consumption compared to the above-mentioned known solutions, it is also possible to automatically and continuously regulate the electric current supplied to the circuit comprising the jaws and the hinge part, and consequently the temperature of this hinge part, according to the detected voltage (and thus the temperature of the jaws and the hinge part), thus preventing too high a temperature from damaging the frame front.

This current control system is, in this particular use, much more effective than other possible controls based on a direct temperature detection in the area to be heated and consequent regulation of the supplied current, since the temperature detection at the seat for the hinge part is very difficult, and in some cases impossible, since the fronts of the eyeglasses are often made of shiny and/or transparent and/or reflective materials, which make remote temperature detection inaccurate or unfeasible, as can be done with a pyrometer or thermal camera.

In particular, the task and purposes according to the present invention are achieved by a heating system for a hinging-machine for fixing a metallic hinge part of a hinge for eyeglasses to a thermoplastic portion of a frame front for eyeglasses frames,
comprising:
- a heating vice, equipped with two metallic jaws having an electrical resistivity comprised between 10 and 40 MΩ, capable of selectively moving said two jaws towards each other in such a way as to grab therebetween a hinge part for eyeglasses;
- a first electronic board, electrically connected to the jaws to supply them with a desired first, direct, supply electric current, and to measure a first electric voltage between two first measuring points of the first electronic board to which the jaws are electrically connected;
- electronic control means, operationally connected to the first electronic board to control it, configured to receive from the first electronic board a signal related to the first electric voltage measured between the two first measuring points, and to cause the first electronic board to supply the jaws with a first, direct, modified electric current, calculated by the electronic control means as a function of the signal related to the first measured electrical voltage.

The task and purposes according to the present invention are also achieved by a method for heating a metallic hinge part of a hinge for eyeglasses, in a hinging-machine for attaching a hinge part of a hinge for eyeglasses to a portion of a frame front for eyeglasses frames made of a thermoplastic material,
comprising the following steps:
- grabbing a metallic hinge part of a hinge for eyeglasses between two, metallic, jaws of a heating vice of the machine, each having an electrical resistivity greater than that of the hinge part;
- supplying, by a first electronic board electrically connected to the jaws, a desired first, direct, supply electric current to the jaws, in order to heat, by Joule effect, the hinge part;
- measuring, by the first electronic board, a first electric voltage between two first measuring points of the first electronic board to which the jaws are electrically connected;
- receiving, from electronic control means, operationally connected to the first electronic board to control it, a signal related to the first electric voltage measured between the two first measuring points;
- calculating, by means of the electronic control means, on the basis of the signal related to the first electrical voltage, a first, direct, modified electric current to be supplied by means of the first electronic board to the jaws;
- operating, by the electronic control means, the first electronic board in order to cause it to supply the jaws with the first modified electric current.

Other advantageous features of the system and method according to the invention are stated in the dependent claims.

The features and advantages of this invention will be more evident from the following description, which is illustrative and not limiting, referring to the attached schematic drawings, in which:
- figure 1 is a schematic front view of an advantageous embodiment of a hinging-machine for eyewear making use of a system and method according to the invention;

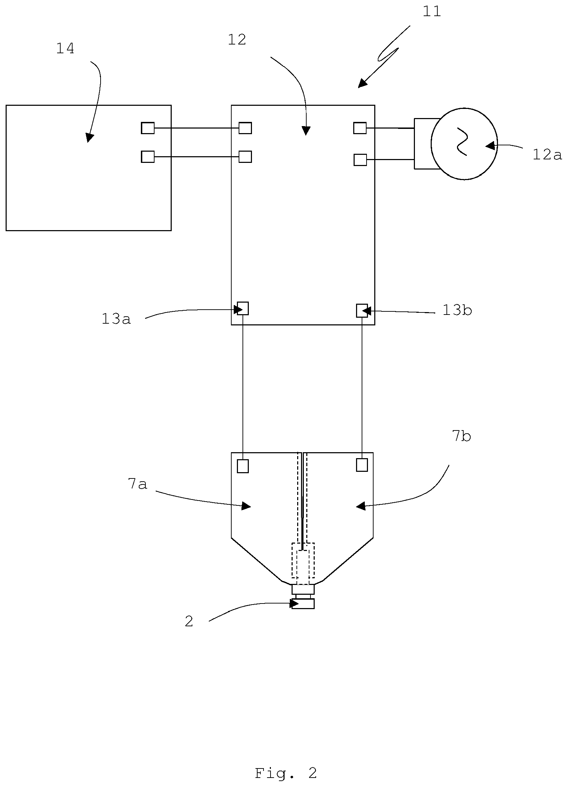

- figure 2 is a schematic representation of a first advantageous embodiment of a heating system according to the invention;

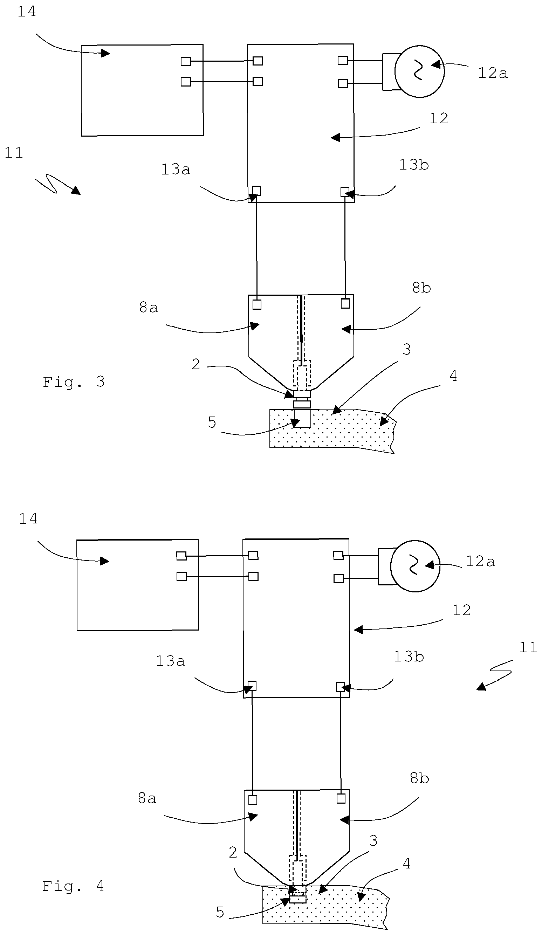

- figures 3 and 4 are two schematic representations of the heating system of figure 2 during its use for the implementation of the method according to the invention;

- figure 5 is a schematic representation of a second advantageous embodiment of a heating system according to the invention;

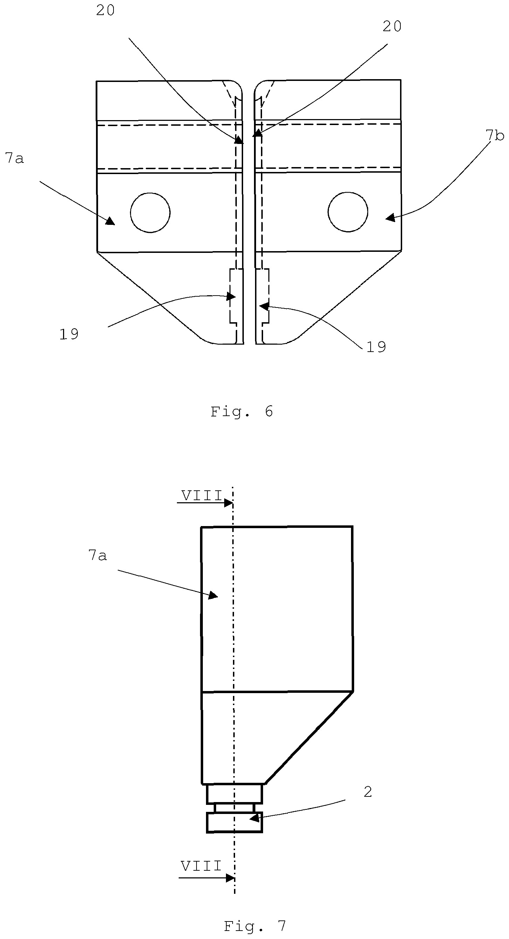

- figure 6 is a front view of an advantageous embodiment of two jaws of the system according to the invention;
- figure 7 is a side view from the left of the jaws of figure 6, in a condition where they are grabbing a hinge part;

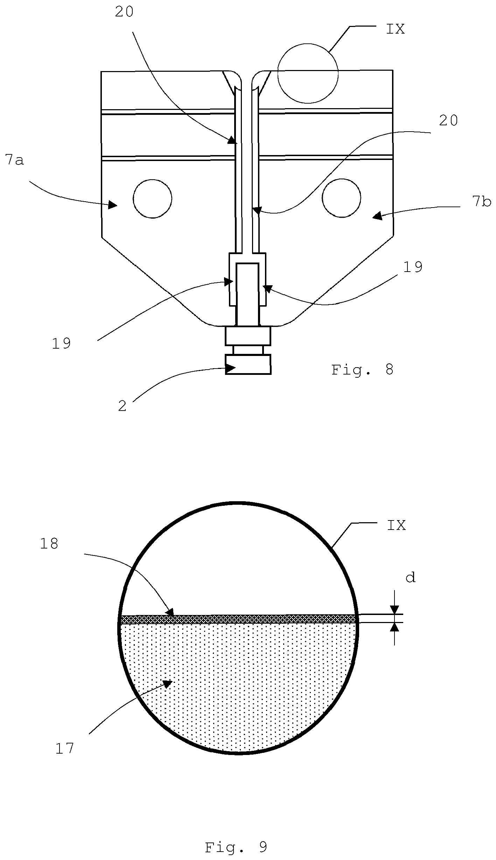

- figure 8 is a section operated according to the section plane VIII-VIII of figure 7;
- figure 9 is an enlarged detail of figure 8.

With reference to the appended figures, a hinging-machine for eyewear, capable of fixing a metallic hinge part 2 of a hinge for eyeglasses to a portion 3 of a frame front 4 for eyeglasses frames made of a thermoplastic material, for example a polymer such as cellulose acetate (of which only a detail is illustrated in the appended figures) is indicated overall by the number 1.

In the machine 1, the hinge part 2 is fixed in a seat 5 obtained, e.g. by milling, in a desired position of the portion 3 of the frame front 4.

It is emphasised that portion 3 may coincide with the entire frame front 4, or it may comprise one or more regions, joined or not, thereof.

Milling can be performed in the same machine 1 or, alternatively, in a different machine, not illustrated; milling to obtain the seat 5 is a technology known in the eyewear industry, and is not the subject matter of the present patent, so it will not be described in detail.

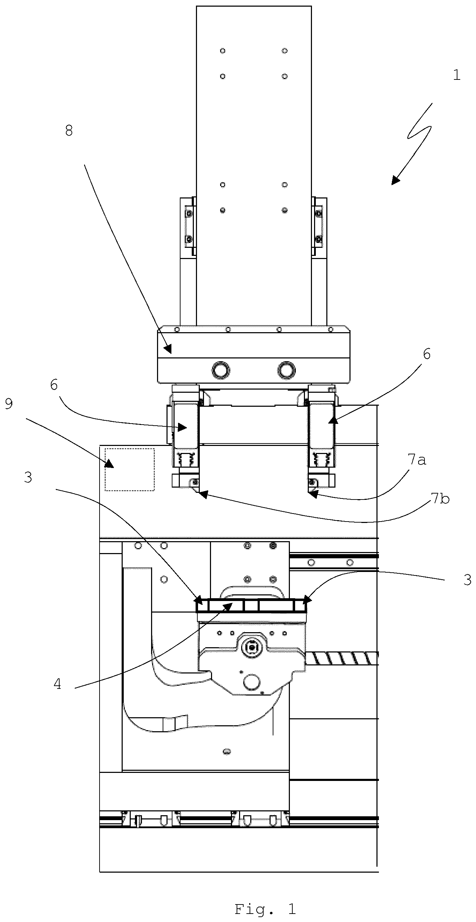

The machine 1 comprises one or more vices 6 (two in the advantageous embodiment of figure 1), each equipped with two metal jaws 7a, 7b, having an electrical resistance much higher than the electrical resistance of the common metal hinge parts used in the eyewear industry (typically less than 1 Q); the electrical resistance of the jaws 7a and 7b is advantageously comprised between 10 and 40 MQ, more preferably between 20 and 25 MΩ.

Advantageously, the two jaws 7a and 7b both have the same electrical resistance.

The heating vice 6 is capable of selectively bringing the jaws 7a and 7b closer together so as to grab a hinge part 2 of a hinge for eyeglasses between them; advantageously, for this purpose, the heating vice 6 comprises drive means 8 capable of moving one or both of the jaws 7a and 7b, and in particular of bringing them closer together and further apart.

Advantageously, the drive means 8 are controlled by an electronic control device 9, such as a PLC (programmable logic controller) or a microcontroller, e.g. at least partially integrated into the drive means 8, or external to the drive means 8, and electrically connected (in a wired or wireless manner) thereto. The electronic control device 9 is shown schematically in figure 1 as a dashed rectangle.

In an advantageous embodiment, the electronic control device 9 is the same (e.g. a programmable logic controller, or PLC) that also controls the other functions (e.g. switching on, switching off, etc.) of the machine 1.

Advantageously, the machine 1 comprises a heating system 11 which in turn comprises a first electronic board 12, electrically connected to the jaws 7a, 7b to supply them with a desired first, direct, electric supply current, and to measure a first electric voltage between two first measuring points 13a, 13b of such first electronic board 12 to which the jaws 7a, 7b are electrically connected.

The first electric supply current is preferably comprised between 1 and 130 Amperes.

Advantageously, the first electronic board 12 can be powered by an alternating voltage, e.g. the mains voltage, schematically represented as a first generator 12a; in an advantageous embodiment, the first electronic board 12 is capable of converting the alternating voltage from the first generator 12a into direct voltage. In a further advantageous embodiment, the first generator 12a is connected to the first electronic board 12 by means of a converter, not illustrated, capable of converting the alternating voltage from the first generator 12a into direct voltage.

The heating system 11 comprises electronic control means 14, operationally connected to the first electronic board 12 to control it.

Such electronic control means 14 can be advantageously integrated into the first electronic board 12 or, as in the embodiments illustrated in the appended figures, can be a separate entity from such first electronic board 12, and be electrically connected thereto, e.g. in a wired manner, or with a wireless connection.

In an advantageous embodiment, such electronic control means 14 may comprise or consist of a PLC or microcontroller.

In an advantageous embodiment, the electronic control means 14 are the same (e.g. a programmable logic controller, or PLC) that also control the other functions (e.g. switching on, switching off, etc.) of the machine 1.

In a preferred embodiment, the electronic control means 14 coincide with the electronic control device 9 controlling the drive means 8, and more preferably also control the other functions of the machine 1.

According to the invention, the electronic control means 14 are configured to (i.e., are "programmed so as to", or "have an electronic topology realised so as to") receive from the first electronic board 12 a signal related to the first electric voltage measured between the two first measuring points 13a and 13b, and to cause the first electronic board 12 to supply the jaws 7a, 7b with a first, direct, modified electric current, calculated by the electronic control means 14 as a function of the signal related to the first measured electrical voltage.

In other words, the electronic control means 14 are configured to modify the current delivered to the jaws 7a and 7b by the first electronic board 12 according to a data item related to the voltage (for example the value of such voltage) measured at the two measuring points to which such jaws 7a and 7b are electrically connected; in this way, the current flowing through the jaws 7a and 7b is adapted to the variations of the electrical resistance of the electrical circuit comprising such jaws 7a and 7b and the hinge part 2 supported thereby (since the value of the voltage measured at the first measuring points 13a and 13b, the supplied current being constant, depends only on the value of the overall resistance of the circuit comprising the jaws 7a and 7b and hinge part 2) which makes it possible to prevent the hinge part 2 being crossed by an excessive current and overheating, ruining the frame front 4, and at the same time ensures heating of such hinge part 2 which allows sufficient melting of the thermoplastic material at the seat 5 of the portion 3 of such frame front 4 to which the hinge part 2 is to be fixed.

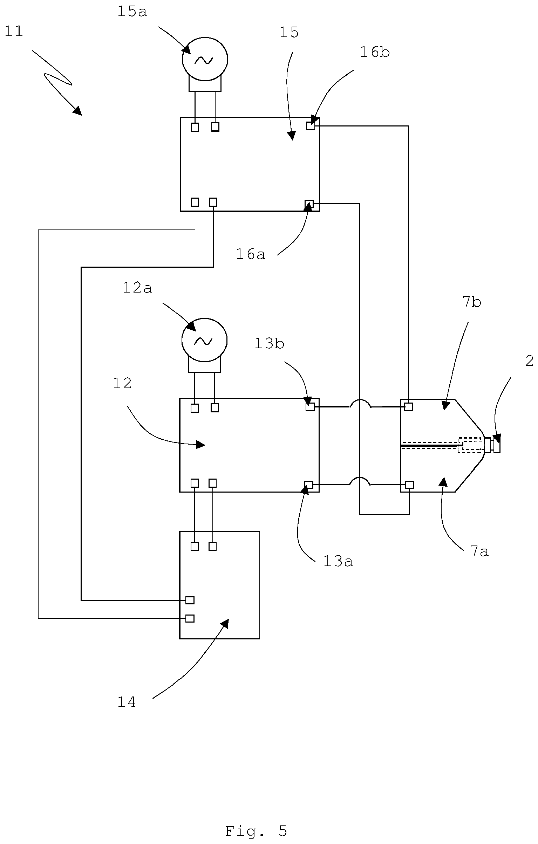

In an advantageous embodiment, such as, for example, the one illustrated in figure 5, the heating system 11 further comprises a second electronic board 15, electrically connected, in parallel to the first electronic board 12, to the jaws 7a and 7b, in order to provide the latter with a desired second electric supply current, direct, and to measure a second electrical voltage between two second measuring points 16a and 16b of the second electronic board 15 to which such jaws 7a and 7b are electrically connected; in this case, the electronic control means 14 are preferably operationally connected to the second electronic board 15 to control it, and are configured to receive from such second electronic board 15 a signal related to the second electrical voltage measured between the two second measurement points 16a and 16b, and to cause the second electronic board 15 to deliver to the jaws 7a and 7b a second modified, direct, electric current calculated by the electronic control means 14 according to the signal related to the second electrical voltage measured.

In this advantageous embodiment, the first electronic board 12 and the second electronic board 15 can thus supply, simultaneously or at different instants, respectively, the first and second supply currents to the circuit comprising the jaws 7a and 7b and the hinge part 2, thus extending the range of possible currents that can flow through these components.

Advantageously, the second electronic board 15 can be powered by an alternating voltage, e.g. the mains voltage, schematically represented as a second generator 15a (which may possibly coincide with, or be distinct from, the first generator 12a); in an advantageous form of implementation, the second electronic board 15 is capable of converting the alternating voltage from the second generator 15a into direct voltage. In a further advantageous embodiment, the second generator 15a is connected to the second electronic board 15 by means of a converter, not illustrated, capable of converting the alternating voltage from the second generator 15a into direct voltage.

In a further advantageous embodiment, not illustrated herein, the heating system 11 may comprise one or more further electronic boards electrically connected to the jaws 7a and 7b, in parallel with the first and second electronic boards, to provide the jaws 7a and 7b with a desired further electrical supply current, direct, and to measure a further electrical voltage between two further measurement points of the further electronic board to which the jaws 7a and 7b are electrically connected; in this case, the electronic control means 14 are preferably operationally connected to the further electronic board to control it, and are configured to receive from such further electronic board a signal related to the further electrical voltage measured between the two further measuring points, and to have the further electronic board deliver to the jaws 7a and 7b a further modified, direct, electric current calculated by the electronic control means 14 according to the signal related to the further electrical voltage measured.

Advantageously, the one or more further electronic boards can be powered by an alternating voltage, e.g. the mains voltage, which they can advantageously convert to direct voltage themselves, or they can be connected to a converter capable of converting an alternating voltage, e.g. the mains voltage, to direct voltage.

In an advantageous embodiment, the jaws 7a and 7b comprise a core 17, made of steel, preferably hardened, more preferably of the AISI 420 type, completely covered with a coating 18 made of a material with an electrical resistivity higher than that of steel.

In preferred embodiments, the coating 18 is made of the material commonly known as DLC (an acronym for "Diamond-Like Carbon", i.e. a class of amorphous carbon material that exhibits some of the properties typical of diamond), or is made of a chromium oxide (CrNOx), or an Aluminium Chromium Nitride (AlCrN) material.

Advantageously, the coating 18 has a thickness d comprised between 2 and 4 microns, more preferably between 3 and 3.5 microns.

The embodiment in which the coating 18 is made of DLC is the most advantageous; this DLC coating has, in addition to high electrical resistance, a high degree of hardness, which guarantees high abrasion resistance and thus a very long service life, and self-cleaning properties, which prevent the depositing on the jaws 7a and 7b of any residual thermoplastic material melted and then re-solidified on the frame front 4, which could compromise the passage of current between the jaws 7a and 7b and the hinge part 2.

The use of steel, in particular hardened steel (a very compression-resistant material), preferably of the AISI 420 type, for the core 17, ensures that the DLC coating 18 does not break (it is in fact hard, but very fragile) when subjected to the closing pressure of the heating vice 6.

The applicant has found that by using jaws 7a and 7b with very high electrical resistance values (such as those obtained by using a coating 18 of one of the above materials, and in particular DLC), in particular higher by several orders of magnitude than the resistance of the hinge part 2 (which in hinge parts of the known types is less than 1 Ω), for example, between 10 and 40 MΩ, more preferably between 20 and 25 MΩ, most of the heat generated by the Joule effect due to the passage of current is generated by the jaws 7a and 7b, which then transmit it by contact to the hinge part 2, heating it.

In fact, since the value of the electrical resistance of the jaws 7a and 7b is very high, the heat produced thereby by the Joule effect (equal to the value of the electrical resistance multiplied by the square of the current) is high even if the electric current flowing through them is relatively low, e.g. less than 150 Amperes, but also 65 Amperes.

In contrast, the heat produced by the Joule effect from hinge part 2 when passed through by such an electric current is rather low, since such hinge part 2 has a very low electrical resistance value.

The hinge part 2 therefore heats up mainly through its contact with the very hot surface of jaws 7a and 7b.

This "indirect" heating mechanism, so to speak, makes it possible to prevent a sudden rise in the temperature of the hinge part 2. It also facilitates the regulation of this temperature by means of an adjustment of the value of the electric current as a function of the voltage measured at the ends of the circuit formed by the jaws 7a and 7b and the hinge part 2 (which in turn depends on the value of the electric resistance of these elements, dependent on their temperature).

In this way, it is possible to prevent the temperature of the hinge part 2 itself from rising rapidly to values that could damage the frame front 4.

In advantageous embodiments, such as those illustrated in the appended figures, the jaws 7a and 7b have, in a front view, a substantially rectangular trapezoid shape; other conformations are however possible.

Advantageously, the jaws 7a and 7b have, in the region thereof that is intended to be coupled with the hinge part 2, a first recess 19, shaped to contain, without contact, a portion of the hinge part 2, so as to reduce the contact surface between the jaws 7a and 7b and the hinge part 2 itself, and consequently increase the contact resistance between these components.

In fact, it was found that a high contact resistance between the jaws 7a and 7b and the hinge part 2 increases the Joule effect heating of the contact area between the jaws 7a and 7b and the hinge part 2, increasing the heating of the latter for the same electric current, which further reduces energy consumption.

Advantageously, the jaws 7a and 7b are provided with a duct 20, communicating with the recess 19, arranged in such a way as to put in fluid communication the recess 19 with the outside of the jaws 7a and 7b, so as to allow a jet of air, e.g. compressed air, to be blown into the recess 19, and remove some of the heat from the hinge part 2 and the jaws 7a and 7b, thus helping to prevent them from overheating.

The operation of the invention is described in the following in relation to its use in a hinging-machine 1 in which a frame front 4 of an eyeglasses frame has been loaded, after the seats 5 for the hinge parts 2 have already been obtained.

A hinge part 2 can be loaded into the heating vice 6 (or two separate hinge parts 2 can be loaded into two separate heating vices 6, if they are advantageously present, as in the advantageous embodiment in figure 1), operating the drive means 8 until such hinge part 2 is clamped between the two jaws 7a and 7b.

In an advantageous embodiment, the heating vice 6 is then moved, by means of a special drive of the machine 1, not illustrated, until the hinge part 2 is brought into a desired position in the vicinity of one of the seats 5 of the frame front 4.

At this point, the heating system 11 according to the invention can be activated.

Through the first electronic board 12, a desired first direct electric supply current, is delivered to the jaws 7a and 7b.

By means of the first electronic board 12 an initial electrical voltage is measured between the first two measuring points 13a and 13b of the first electronic board 12 to which the jaws 7a and 7b are electrically connected.

The electronic control means 14, operationally connected to the first electronic board 12 to control it, then receive a signal related to the first electrical voltage measured between the first two measuring points 13a and 13b, and calculate, according to this signal, a first modified electric current to be delivered by the first electronic board 12 to the jaws 7a and 7b.

The electronic control means 14 then operate the first electronic board 12 to deliver the first modified current to the jaws 7a and 7b.

Real-time regulation of the current delivered to the jaws 7a and 7b and to the hinge part 2 allows the thermal power transmitted to the hinge part 2, and consequently its temperature, to be adjusted in real time, so as to prevent excessive heating of the hinge part, which could damage the frame front 4.

In a further advantageous embodiment, such as for example the one illustrated in figure 5, wherein the heating system 11 also comprises a second electronic board 15, electrically connected, in parallel to the first electronic board 12, to the jaws 7a and 7b, and controlled by the electronic control means 14, this second electronic board 15 can also be operated to deliver a desired second electric supply current, direct, to the jaws 7a and 7b and to measure a second electrical voltage between two second measuring points 16a and 16b of the second electronic board 15 to which such jaws 7a and 7b are electrically connected; in this case, the electronic control means 14 also receive a signal related to the second electrical voltage, and calculate, according to this signal, a second modified, direct, electric current to be delivered by the second electronic card 15 to the jaws 7a and 7b.

In this advantageous embodiment, the first electronic board 12 and the second electronic board 15 can thus supply, simultaneously or at different instants, respectively, the first and second supply currents, or the first and second modified electric currents, to the circuit comprising the jaws 7a and 7b and the hinge part 2, thus extending the range of possible currents that can flow through these components.

In the further advantageous embodiment, not illustrated, in which the heating system 11 comprises one or more further electronic boards electrically connected to the jaws 7a and 7b, in parallel to the first and second electronic boards and controlled by the electronic control means 14, each of these one or more further electronic boards can also be operated to deliver a desired further electric supply current, direct, to the jaws 7a and 7b and to measure a further electrical voltage between two further measuring points of such further electronic board to which such jaws 7a and 7b are electrically connected; in this case, the electronic control means 14 also receive a signal related to the further electrical voltage, and calculate, according to this signal, a further modified, direct, electric current to be supplied by means of the further electronic board 15 to the jaws 7a and 7b.

In this advantageous embodiment, the first electronic board 12, the second electronic board 15, and the one or more further electronic boards, not illustrated, may thus supply, simultaneously or at different instants, respectively, the first, second, and one or more further supply currents, or the first, second, and one or more further modified electric currents, to the circuit comprising the jaws 7a and 7b and the hinge part 2, so as to broaden the range of possible currents which may flow through such components.

It was thus found that the system and method according to the invention solves the above-mentioned task and purpose, since, thanks to the high electrical resistance of the jaws with respect to the hinge part, and in particular with respect to the jaws used in the known technique, it is possible to supply them with a much lower, direct, electric current compared to the known technique, thus greatly reducing the power consumed by this heating system compared to known solutions.

In addition, thanks to the possibility of using a low-value direct electric current, it is possible to easily control its output in real time according to the measured voltage (which in turn is a function of the resistance of the jaws and the hinge part, which varies with temperature), thus reducing the risk of overheating the hinge part, which could damage the frame front of the frame.

In addition, the heating system and method according to the invention are user-friendly and require little human intervention.

Finally, it is clear that the method according to the invention described herein is susceptible to numerous modifications or variations, all of which are within the scope of the appended claims.

## Claims

1. Heating system (11) for a hinging-machine (1) for fixing a metallic hinge part (2) of a hinge for eyeglasses to a portion (3) of a frame front (4) for eyeglasses frames made of a thermoplastic material, comprising a heating vice (6), equipped with two metallic jaws (7a, 7b) capable of selectively approach one another said two jaws (7a, 7b) in such a way as to grab therebetween a hinge part (2) for eyeglasses, a first electronic board (12) electrically connected to said jaws to supply them with a desired first, direct, supply electric current, and electronic control means (14), operationally connected to said first electronic board (12) to control it,
**characterised by the fact** that the two metallic jaws (7a, 7b) have an electrical resistivity comprised between 10 and 40 MΩ, that the first electronic board (12) is electrically connected to said jaws (7a, 7b) to measure a first electric voltage between two first measuring points (13a, 13b) of said first electronic board (12) to which said jaws (7a, 7b) are electrically connected; and that the electronic control means (14) are configured to receive from said first electronic board (12) a signal related to said first electric voltage measured between said two first measuring points (13a, 13b), and to cause said first electronic board (12) to supply said jaws (7a, 7b) with a first, direct, modified electric current, calculated by said electronic control means (14) as a function of said signal related to said first measured electrical voltage.

2. Heating system (11), as in claim 1, wherein said first electronic board (12) supplies said jaws (7a, 7b) with a first supply electric current comprised between 1 and 130 Ampere.

3. Heating system (11), as in claim 1 or 2, comprising a second electronic board (15) electrically connected, in parallel to said first electronic board (12), to said jaws (7a, 7b), for supplying the latter with a desired second, direct, supply electric current, and to measure a second electric voltage between two seconds measuring points (16a, 16b) of said second electronic board (15) to which said jaws (7a, 7b) are electrically connected,
wherein said electronic control means (14) are operationally connected to said second electronic board (15) to control it, and are configured to receive from said second electronic board (15) a signal related to said second electric voltage measured between said two seconds measuring points (16a, 16b), and to cause said second electronic board (15) to supply said jaws (7a, 7b) with a second, direct, modified electric current, calculated by said electronic control means (14) as a function of said signal related to said second measured electrical voltage.

4. Heating system (11), as in one or more previous claims, wherein said jaws (7a, 7b) comprise a core (17), made of steel, completely covered with a coating (18) made of a material with an electrical resistivity higher than that of steel.

5. Heating system (11), as in claim 4, wherein said steel is AISI 420 type.

6. Heating system (11), as in claim 4 or 5, wherein said coating (18) is made of the material known as DLC (Diamond-Like Carbon), or is made of a chromium oxide (CrNOx), or of a material based on Aluminium Chromium Nitride (AlCrN).

7. Heating system (11), as in claim 4 or 5 or 6, wherein said coating (18) has a thickness (d) comprised between 2 and 4 microns.

8. Method for heating a metallic hinge part (2) of a hinge for eyeglasses, in a hinging-machine for the fixing of a hinge part (2) of a hinge for eyeglasses to a portion (3) of a frame front (4) for eyeglasses frames made of a thermoplastic material,
**characterised by** the fact of comprising the following steps:
- grabbing a metallic hinge part (2) of a hinge for eyeglasses between two, metallic, jaws (7a, 7b) of a heating vice (6) of said machine (1), each having an electrical resistivity greater than that of said hinge part (2);
- supplying, by a first electronic board (12) electrically connected to said jaws (7a, 7b), a desired first, direct, supply electric current to said jaws (7a, 7b), in order to heat, by Joule effect, said hinge part (2);
- measuring, by said first electronic board (12), a first electric voltage between two first measuring points (13a, 13b) of said first electronic board (12) to which said jaws (7a, 7b) are electrically connected;
- receiving, from electronic control means (14), operationally connected to said first electronic board (12) to control it, a signal related to said first electric voltage measured between said two first measuring points (13a, 13b);
- calculating, by means of said electronic control means (14), on the basis of said signal related to said first electrical voltage, a first, direct, modified electric current to be supplied by means of said first electronic board (12) to said jaws (7a, 7b);
- operating, by said electronic control means (14), said first electronic board (12) in order to cause it to supply said jaws (7a, 7b) with said first modified electric current.

9. Method, as in claim 8, wherein said electrical resistivity of said jaws (7a, 7b) is comprised between 10 and 40 MΩ.

10. Method, as in claim 8 or 9, comprising the following steps:
- supplying, by a second electronic board (15) of said machine (1), electrically connected to said jaws (7a, 7b), a desired second direct, electric current to said jaws (7a, 7b);
- measuring, by said second electronic board (15), a second electric voltage between two seconds measuring points (16a, 16b) of said second electronic board (15) to which said jaws (7a, 7b) are electrically connected;
- receiving, by electronic control means (14) of said machine (1), operationally connected to said second electronic board (15) to control it, a signal related to said second electric voltage measured between said two seconds measuring points (16a, 16b);
- calculating, by said electronic control means (14), on the basis of said signal related to said second measured electric voltage, a second, direct, modified electric current to be supplied by means of said second electronic board (15) to said jaws (7a, 7b);
- operating, by means of said electronic control means (14), said second electronic board (15) in order to cause it supply said jaws (7a, 7b) with said second modified electric current.

## Patentansprüche

1. Heizsystem (11) für eine Montiermaschine (1) zum Befestigen eines metallischen Scharnierteils (2) eines Scharniers für Brillen an einem Abschnitt (3) einer Fassungsfront (4) für Brillenfassungen aus einem thermoplastischen Material, umfassend einen Heizschraubstock (6), der mit zwei metallischen Backen (7a, 7b) ausgestattet ist, die in der Lage sind, sich selektiv den beiden Backen (7a, 7b) so zu nähern, dass sie dazwischen ein Scharnierteil (2) für Brillen ergreifen, eine erste elektronische Platine (12), die elektrisch mit den Backen verbunden ist, um sie mit einem gewünschten ersten, elektrischen Versorgungsgleichstrom zu versorgen, und elektronische Steuermittel (14), die betriebswirksam mit der ersten elektronischen Platine (12) verbunden sind, um sie zu steuern,
**dadurch gekennzeichnet, dass** die zwei metallischen Backen (7a, 7b) einen spezifischen elektrischen Widerstand zwischen 10 und 40 MΩ aufweisen, dadurch, dass die erste elektronische Platine (12) elektrisch mit den Backen (7a, 7b) verbunden ist, um eine erste elektrische Spannung zwischen zwei ersten Messpunkten (13a, 13b) der ersten elektronischen Platine (12) zu messen, mit denen die Backen (7a, 7b) elektrisch verbunden sind; und dadurch, dass die elektronischen Steuermittel (14) konfiguriert sind, um von der ersten elektronischen Platine (12) ein Signal zu empfangen, das sich auf die erste elektrische Spannung bezieht, die zwischen den zwei ersten Messpunkten (13a, 13b) gemessen wird, und um die erste elektronische Platine (12) zu veranlassen, die Backen (7a, 7b) mit einem ersten, modifizierten elektrischen Gleichstrom zu versorgen, der von den elektronischen Steuermitteln (14) als Funktion des Signals berechnet wird, das sich auf die erste gemessene elektrische Spannung bezieht.

2. Heizsystem (11) nach Anspruch 1, wobei die erste elektronische Platine (12) die Backen (7a, 7b) mit einem ersten elektrischen Versorgungsstrom zwischen 1 und 130 Ampere versorgt.

3. Heizsystem (11) nach Anspruch 1 oder 2, umfassend eine zweite elektronische Platine (15), die parallel zu der ersten elektronischen Platine (12) elektrisch mit den Backen (7a, 7b) verbunden ist, um diese mit einem gewünschten zweiten, elektrischen Versorgungsgleichstrom zu versorgen und eine zweite elektrische Spannung zwischen zwei zweiten Messpunkten (16a, 16b) der zweiten elektronische Platine (15) zu messen, mit denen die Backen (7a, 7b) elektrisch verbunden sind, wobei die elektronischen Steuermittel (14) betriebswirksam mit der zweiten elektronischen Platine (15) verbunden sind, um sie zu steuern, und konfiguriert sind, um von der zweiten elektronischen Platine (15) ein Signal zu empfangen, das sich auf die zweite elektrische Spannung bezieht, die zwischen den zwei zweiten Messpunkten (16a, 16b) gemessen wird, und um die zweite elektronische Platine (15) zu veranlassen, die Backen (7a, 7b) mit einem zweiten, modifizierten elektrischen Gleichstrom zu versorgen, der von den elektronischen Steuermitteln (14) als eine Funktion des Signals berechnet wird, das sich auf die zweite gemessene elektrische Spannung bezieht.

4. Heizsystem (11) nach einem oder mehreren der vorhergehenden Ansprüche, wobei die Backen (7a, 7b) einen Kern (17) aus Stahl umfassen, der vollständig mit einer Beschichtung (18) aus einem Material mit einem höheren spezifischen elektrischen Widerstand als Stahl bedeckt ist.

5. Heizsystem (11) nach Anspruch 4, wobei der Stahl vom Typ AISI 420 ist.

6. Heizsystem (11) nach Anspruch 4 oder 5, wobei die Beschichtung (18) aus dem als DLC (Diamond-Like Carbon) bekannten Material oder aus einem Chromoxid (CrNOx) oder aus einem Material auf der Basis von Aluminiumchromnitrid (AlCrN) gefertigt ist.

7. Heizsystem (11) nach Anspruch 4 oder 5 oder 6, wobei die Beschichtung (18) eine Dicke (d) zwischen 2 und 4 Mikron aufweist.

8. Verfahren zum Erwärmen eines metallischen Scharnierteils (2) eines Scharniers für Brillen in einer Montiermaschine zum Befestigen eines Scharnierteils (2) eines Scharniers für Brillen an einem Abschnitt (3) einer Fassungsfront (4) für Brillenfassungen aus einem thermoplastischen Material,
**dadurch gekennzeichnet, dass** sie die folgenden Schritte umfasst:
- Ergreifen eines metallischen Scharnierteils (2) eines Scharniers für Brillen zwischen zwei metallischen Backen (7a, 7b) eines Heizschraubstocks (6) der Maschine (1), die jeweils einen spezifischen elektrischen Widerstand aufweisen, der größer als der des Scharnierteils (2) ist;
- Zuführen eines gewünschten ersten, elektrischen Gleichstroms zu den Backen (7a, 7b) durch eine erste elektronische Platine (12), die elektrisch mit den Backen (7a, 7b) verbunden ist, um das Scharnierteil (2) durch Joule-Effekt zu erwärmen;
- Messen einer ersten elektrischen Spannung zwischen zwei ersten Messpunkten (13a, 13b) der ersten elektronische Platine (12), mit denen die Backen (7a, 7b) elektrisch verbunden sind, durch die erste elektronische Platine (12);
- Empfangen eines Signals, das sich auf die erste elektrische Spannung bezieht, die zwischen den zwei ersten Messpunkten (13a, 13b) gemessen wird, von elektronischen Steuermitteln (14), die betriebswirksam mit der ersten elektronischen Platine (12) verbunden sind, um sie zu steuern;
- Berechnen, mittels der elektronischen Steuermittel (14), auf der Grundlage des Signals, das sich auf die erste elektrische Spannung bezieht, eines ersten, modifizierten elektrischen Gleichstroms, der mittels der ersten elektronischen Platine (12) den Backen (7a, 7b) zuzuführen ist;
- Betreiben der ersten elektronischen Platine (12) durch die elektronischen Steuermittel (14), um sie zu veranlassen, die Backen (7a, 7b) mit dem ersten modifizierten elektrischen Strom zu versorgen.

9. Verfahren nach Anspruch 8, wobei der spezifische elektrische Widerstand der Backen (7a, 7b) zwischen 10 und 40 MΩ liegt.

10. Verfahren nach Anspruch 8 oder 9, umfassend die folgenden Schritte:
- Zuführen eines gewünschten zweiten elektrischen Gleichstroms zu den Backen (7a, 7b) durch eine zweite elektronische Platine (15) der Maschine (1), die elektrisch mit den Backen (7a, 7b) verbunden ist;
- Messen einer zweiten elektrischen Spannung durch die zweite elektronische Platine (15) zwischen zwei zweiten Messpunkten (16a, 16b) der zweiten elektronischen Platine (15), mit denen die Backen (7a, 7b) elektrisch verbunden sind;
- Empfangen eines Signals, das sich auf die zweite elektrische Spannung bezieht, die zwischen den zwei zweiten Messpunkten (16a, 16b) gemessen wird, durch elektronische Steuermittel (14) der Maschine (1), die betriebswirksam mit der zweiten elektronischen Platine (15) verbunden sind, um sie zu steuern;
- Berechnen, mittels der elektronischen Steuermittel (14), auf der Grundlage des Signals, das sich auf die zweite gemessene elektrische Spannung bezieht, eines zweiten, modifizierten elektrischen Gleichstroms, der mittels der zweiten elektronischen Platine (15) den Backen (7a, 7b) zuzuführen ist;
- Betreiben der zweiten elektronischen Platine (15) mittels der elektronischen Steuermittel (14), um sie zu veranlassen, die Backen (7a, 7b) mit dem zweiten modifizierten elektrischen Strom zu versorgen.

## Revendications

1. Système de chauffage (11) pour une machine à charnière (1) destinée à fixer une pièce de charnière métallique (2) d'une charnière pour lunettes à une partie (3) d'une monture avant (4) pour des montures de lunettes en matériau thermoplastique, comprenant un étau chauffant (6), équipé de deux mâchoires métalliques (7a, 7b) capables de s'approcher sélectivement l'une de l'autre, lesdites deux mâchoires (7a, 7b) de manière à saisir entre elles une pièce de charnière (2) pour lunettes, une première carte électronique (12) connectée électriquement auxdites mâchoires pour les alimenter avec un premier courant électrique d'alimentation direct souhaité, et des moyens de commande électroniques (14), connectés fonctionnellement à ladite première carte électronique (12) pour la commander,
**caractérisé par le fait que** les deux mâchoires métalliques (7a, 7b) ont une résistivité électrique comprise entre 10 et 40 MΩ, que la première carte électronique (12) est connectée électriquement auxdites mâchoires (7a, 7b) pour mesurer une première tension électrique entre deux premiers points de mesure (13a, 13b) de ladite première carte électronique (12) auxquels sont connectées électriquement lesdites mâchoires (7a, 7b) ; et que les moyens électroniques de commande (14) sont configurés pour recevoir de ladite première carte électronique (12) un signal relatif à ladite première tension électrique mesurée entre lesdits deux premiers points de mesure (13a, 13b), et pour amener ladite première carte électronique (12) à alimenter lesdites mâchoires (7a, 7b) avec un premier courant électrique direct modifié, calculé par lesdits moyens électroniques de commande (14) en fonction dudit signal relatif à ladite première tension électrique mesurée.

2. Système de chauffage (11), selon la revendication 1, dans lequel ladite première carte électronique (12) alimente lesdites mâchoires (7a, 7b) avec un premier courant électrique d'alimentation compris entre 1 et 130 ampères.

3. Système de chauffage (11), selon la revendication 1 ou 2, comprenant une seconde carte électronique (15) connectée électriquement, en parallèle à ladite première carte électronique (12), auxdites mâchoires (7a, 7b), pour alimenter ces dernières avec un second courant électrique d'alimentation direct souhaité, et pour mesurer une seconde tension électrique entre deux seconds points de mesure (16a, 16b) de ladite seconde carte électronique (15) auxquels sont connectées électriquement lesdites mâchoires (7a, 7b),
dans lequel lesdits moyens de commande électronique (14) sont connectés fonctionnellement à ladite seconde carte électronique (15) pour la contrôler, et sont configurés pour recevoir de ladite seconde carte électronique (15) un signal relatif à ladite seconde tension électrique mesurée entre lesdits deux seconds points de mesure (16a, 16b), et pour amener ladite seconde carte électronique (15) à alimenter lesdites mâchoires (7a, 7b) avec un second courant électrique modifié, direct, calculé par lesdits moyens de commande électronique (14) en fonction dudit signal relatif à ladite seconde tension électrique mesurée.

4. Système de chauffage (11), selon une ou plusieurs revendications précédentes, dans lequel lesdites mâchoires (7a, 7b) comprennent un noyau (17), en acier, entièrement recouvert d'un revêtement (18) en un matériau ayant une résistivité électrique supérieure à celle de l'acier.

5. Système de chauffage (11) selon la revendication 4, dans lequel l'acier est de type AISI 420.

6. Système de chauffage (11) selon la revendication 4 ou 5, dans lequel ledit revêtement (18) est constitué du matériau connu sous le nom de DLC (Diamond-Like Carbon), ou est constitué d'un oxyde de chrome (CrNOx), ou d'un matériau à base de nitrure de chrome d'aluminium (AlCrN).

7. Système de chauffage (11) selon la revendication 4, 5 ou 6, dans lequel le revêtement (18) a une épaisseur (d) comprise entre 2 et 4 microns.

8. Procédé de chauffage d'une pièce métallique (2) d'une charnière pour lunettes, dans une machine à charnière pour la fixation d'une pièce de charnière (2) d'une charnière pour lunettes à une partie (3) d'une monture avant (4) pour des montures de lunettes en matériau thermoplastique,
**caractérisée par** le fait de comprendre les étapes suivantes:
- saisir une pièce métallique (2) d'une charnière pour lunettes entre deux mâchoires métalliques (7a, 7b) d'un étau chauffant (6) de ladite machine (1), chacune ayant une résistivité électrique supérieure à celle de ladite pièce de charnière (2);
- alimenter, par une première carte électronique (12) connectée électriquement auxdites mâchoires (7a, 7b), lesdites mâchoires (7a, 7b) avec un premier courant électrique d'alimentation direct souhaité, afin de chauffer, par effet Joule, ladite partie de charnière (2);
- mesurer, par ladite première carte électronique (12), une première tension électrique entre deux premiers points de mesure (13a, 13b) de ladite première carte électronique (12) auxquels sont connectées électriquement lesdites mâchoires (7a, 7b);
- recevoir, de la part des moyens électroniques de contrôle (14), connectés fonctionnellement à ladite première carte électronique (12) pour la contrôler, un signal relatif à ladite première tension électrique mesurée entre lesdits deux premiers points de mesure (13a, 13b);
- calculer, au moyen desdits moyens électroniques de contrôle (14), sur la base dudit signal relatif à ladite première tension électrique, un premier courant électrique direct modifié avec lequel alimenter, au moyen de ladite première carte électronique (12), lesdites mâchoires (7a, 7b);
- faire fonctionner, par ledit moyen de commande électronique (14), ladite première carte électronique (12) afin de l'amener à alimenter lesdites mâchoires (7a, 7b) avec ledit premier courant électrique modifié.

9. Procédé selon la revendication 8, dans lequel la résistivité électrique des mâchoires (7a, 7b) est comprise entre 10 et 40 MΩ.

10. Procédé selon la revendication 8 ou 9, comprenant les étapes suivantes:
- alimenter, par une deuxième carte électronique (15) de ladite machine (1), connectée électriquement auxdites mâchoires (7a, 7b), lesdites mâchoires (7a, 7b) avec un deuxième courant électrique continu souhaité;
- mesurer, par ladite seconde carte électronique (15), une seconde tension électrique entre deux seconds points de mesure (16a, 16b) de ladite seconde carte électronique (15) auxquels sont connectées électriquement lesdites mâchoires (7a, 7b);
- recevoir, par les moyens électroniques de commande (14) de ladite machine (1), connectés fonctionnellement à ladite seconde carte électronique (15) pour la commander, un signal relatif à ladite seconde tension électrique mesurée entre lesdits deux seconds points de mesure (16a, 16b);
- calculer, par lesdits moyens électroniques de commande (14), sur la base dudit signal relatif à ladite deuxième tension électrique mesurée, un deuxième courant électrique direct modifié avec lequel alimenter, au moyen de ladite deuxième carte électronique (15), lesdites mâchoires (7a, 7b);
- faire fonctionner, au moyen desdits moyens de commande électronique (14), ladite deuxième carte électronique (15) afin qu'elle alimente lesdites mâchoires (7a, 7b) avec ledit deuxième courant électrique modifié.
